# EUROPÄISCHE PATENTSCHRIFT

(11) **EP 1 048 754 B1**
(45) Veröffentlichungstag und Bekanntmachung des Hinweises auf die Patenterteilung: **22.10.2003**
(21) Anmeldenummer: 00108494.6
(22) Anmeldetag: 19.04.2000
(51) Int. Cl.: C25D 13/02, C25D 13/22

(54) **Verfahren zur Aufbereitung eines Elektrophoresebades**
Procedure for the preparation of an electrophoretic bath
Procédure pour la préparation d'un bain électrophorétique

(30) Priorität: 30.04.1999 DE 19919818
(43) Veröffentlichungstag der Anmeldung: 02.11.2000
(73) Patentinhaber: ROBERT BOSCH GMBH, 70442 Stuttgart (DE)
(72) Erfinder: Koengeter, Imke, 70199 Stuttgart (DE); Wuehrl, Ingrid, 70839 Gerlingen (DE); Eisele, Ulrich, 70199 Stuttgart (DE); Drumm, Robert, 66113 Saarbrücken (DE); Knoll, Stefan, 66123 Saarbrücken (DE); Nonninger, Ralph, 66129 Saarbrücken (DE); Schmidt, Helmut, 66130 Saarbrücken (DE)

(56) Entgegenhaltungen:
- EP-A- 0 289 412
- EP-A- 0 402 686
- EP-A- 0 424 673
- DE-A- 3 731 275
- GB-A- 2 158 463
- US-A- 5 021 376

## Beschreibung

Die Erfindung betrifft ein Verfahren zur Aufbereitung eines Bades zur elektrophoretischen Abscheidung von nanokristallinem Metalloxid.

Die Formgebung keramischer Körper durch Elektrophorese kann zu sehr homogenen und dicht gepackten Grünkörpern führen, ohne den bei anderen Formgebungsverfahren typischerweise auftretenden Defekten, wie Preßrisse oder Dichtefluktuationen. Im Gegensatz zu plastischen Formgebungsverfahren ist ferner kein Entbinderungsschritt notwendig. Darüber hinaus ist die Elektrophorese das einzige Formgebungsverfahren, bei dem die Konsolidierungsgeschwindigkeit unabhängig von der Pulverkorngröße ist.

Bei Korngrößen der keramischen Pulver von unter 100 nm ergeben sich jedoch ungünstige Badeigenschaften, die von der unvollständigen Dispergierung herrühren. Es tritt Sedimentation auf. Die aus diesen Bädern mittels Elektrophorese gewonnenen Körper zeigen geringe Packungsdichten und eine hohe Trockenschrumpfung, was zu Rissen führen kann.

Nanokristalline Pulver liegen jedoch fast immer als agglomerierte Pulver vor. Diese aus nanokristallinen Primärteilchen bestehenden Agglomerate lassen sich jedoch kaum mehr aufschließen. Entsprechende Versuche in einer Mörsermühle führten bei Einsatz eines unstabilisierten ZrO₂-Pulvers lediglich zu einer mittleren Korngröße von 130 nm.

Erst unter Einsatz eines Hochleistungsattritors ist es ansatzweise gelungen, zu mittleren Korngrößen von etwa 100 nm zu gelangen. Hierbei wird es jedoch als Nachteil angesehen, daß ein hoher Mahlkugelverschleiß auftritt und daß in sehr verdünnten Suspensionen gearbeitet werden muß.

Gröbere Pulver werden üblicherweise in Kugelmühlen oder in Mörsern zerkleinert, wie in DE 37 31 275 A1, DE 39 03 728 A1 und EP 0 316 275 A2 beschrieben. Darin werden Verfahren zur Herstellung von supraleitenden keramischen Schichten vorgeschlagen. Die eingesetzten Metalloxide werden in trockenem oder feuchtem Zustand auf Größen von 100-50.000 nm gemahlen. Die Abscheidungen finden in wäßrigen oder in polaren organischen Lösungsmitteln statt, wobei kurzkettige Alkohole mit Kettenlängen bis 6 C-Atome gut geeignet sind. Je nach System werden als Elektrolyte Salze, wie Ammoniumnitrat, -chlorid, -bromid, starke Säuren, wie Schwefelsäure und Phosphorsäure oder starke Basen, wie Natronlauge und Kalilauge zugegeben.

Die Abscheidung aus Gold-, Silber-, Platin-, Palladiumund Nickelchromelektroden wird bei Stromdichten im Fall der EP 0 316 275 A2 in wäßrigen Medien bei 5-30 mA/cm² und in organischen Medien bei 0,5-3 mA/cm² durchgeführt. Bei der DE 3 731 275 A1 wird mit 0,01 mA/cm² in 1-Butanol abgeschieden.

Die in diesen Veröffentlichungen beschriebenen Pulver sind relativ grob und bedürfen daher keiner scherkraftintensiven Aufbereitung zur Dispergierung.

Die Aufgabe vorliegender Erfindung bestand daher darin, ein Verfahren bereitzustellen, durch das auch nanokristalline Metalloxide verarbeitet werden können.

Die Aufgabe wird erfindungsgemäß durch ein Verfahren zur Aufbereitung eines Bades zur elektrophoretischen Abscheidung von nanokristallinem Metalloxid gelöst, das dadurch gekennzeichnet ist, daß ein das Metalloxid mit 35-65 Vol.-% und einen Dispergator enthaltendes lösungsmittelhaltiges Konzentrat in einem Kneter geknetet wird, und daß nach der Aufbereitung das Konzentrat mit Ethanol und/oder Butanol auf einen Metalloxidanteil von 2-25 Vol.-% verdünnt wird.

In einer bevorzugten Ausführungsform wird mit einer derart hohen Scherkraft geknetet, daß das Metalloxid eine mittlere Korngröße von 20-80 nm aufweist.

Als geeigneter Kneter kann beispielsweise ein Walzenkneter verwendet werden.

Durch die erfindungsgemäße Aufbereitung kann eine sehr gute Dispergierung des nanokristallinen Pulvers erzielt werden. Dies führt zu einer guten Konsolidierung der freien Partikel bei der Abscheidung und damit zu sehr hohen Packungsdichten im Grünkörper. Da zusätzlich keine Schädigung durch Entbinderungsvorgänge auftreten können, ist das Sinterverhalten der Grünkörper besser als bei jedem anderen Formgebungsverfahren. Ein weiterer Vorteil besteht in der niedrigen Sintertemperatur. Sie beträgt beispielsweise für monoklines ZrO₂ 1100°C. Auf diese Weise lassen sich nunmehr Schichten von einigen 10 µm Dicke oder Körper mit 3 mm Dicke herstellen. Als besonders vorteilhaft wird auch angesehen, daß diese Körper nunmehr auch großflächig herstellbar sind.

Als Dispergator eignet sich insbesondere Trioxadecansäure (TODS). Diese wird vorzugsweise mit 0,5-10 Gew.-%, insbesondere mit 3-5 Gew.-% des Feststoffs des Konzentrats eingesetzt.

Das Konzentrat enthält üblicherweise Ethanol und/oder Butanol. Wasser ist wegen Blasenbildung infolge der Elektrolyse ungünstig.

In einer bevorzugten Ausführungsform der Erfindung wird ein das Metalloxid mit 45-55 Vol.-% enthaltendes Konzentrat eingesetzt.

Als Metalloxide können ZrO₂, Al₂O₃, TiO₂, SiO₂ und BaTiO₃ eingesetzt werden. Diese können allein oder in Kombination verwendet werden.

Die Abscheidung des keramischen Pulvers erfolgt bei einer Stromdichte von 0,1-2,5 mA/cm², vorzugsweise bei 0,15-1,2 mA/cm². Die Abscheidezeiten zur Herstellung von 0,1-5 mm dicken, auch großflächigen Schichten liegen zwischen 0,5-600 min.

Durch das erfindungsgemäße Verfahren werden nunmehr nanokristalline, jedoch teilagglomerierte Pulver durch Elektrophorese verarbeitbar. Dadurch wird erstmals die Herstellung von 100 % verdichteten monoklinen ZrO₂-Körpern möglich. Die Kombination von niedriger Sintertemperatur, die durch die nanokristallinen Pulver möglich wird, und einem flexiblen Formgebungsverfahren, durch das dünne bis sehr dicke. Schichten erzeugt werden können und durch das die Option der Strukturierung gegeben ist, eröffnet neue vorteilhafte Perspektiven in der keramischen Aufbautechnik.

Die Erfindung soll im Folgenden anhand von Beispielen näher erläutert werden.

### Beispiel 1

Es wurde ein Knetansatz wie folgt hergestellt: ZrO₂ (Typ VP, Hersteller Degussa AG) mit einer mittleren Agglomeratgröße von 190 nm wurde mit 3,25 Gew.-% TODS in wasserfreiem Ethanol geknetet. Dabei belegte die TODS die Oberfläche des ZrO₂. Der Ansatz bestand aus 54 Vol.-% ZrO₂. Die Komponenten wurden abwechselnd in die Knetkammer gegeben, die wegen der starken Eigenerwärmung der Masse gekühlt werden mußte. Die Knetdauer betrug 120 min. Das Drehmoment stellte sich bei 60 Nm, die Temperatur bei 40°C ein.

Nach Beendigung der Aufbereitung im Kneter wurde die Masse in wasserfreies Ethanol gegeben und die ZrO₂-Konzentration auf 25 Vol.-% eingestellt. Durch den Knetprozess wurden die ZrO₂-Teilchen auf eine mittlere Korngröße von 49 nm redispergiert. Diese Korngrößenmessung erfolgte nach dem Prinzip der dynamischen Laserstreuung.

Es konnten fehlerfreie Grünkörper mit den maximalen Abmessungen 115 x 70 x 3 mm durch das elektrophoretische Abscheidungsverfahren hergestellt werden, die nach 10 Stunden und 1100°C zu 100 % dicht gesintert waren, bezogen auf die theoretische Dichte von 5,8 g/cm³. Die Sinterkörper bestanden zu 97 % aus monokliner Phase. Bei einer Stromdichte von 1,1 mA/cm² wurde in 150 s eine Schichtdicke von 1,2 mm erreicht. Bei einer Stromdichte von 0,13 mA/cm² wird in 3800 s eine Schichtdicke von 3,0 mm erreicht.

### Beispiel 2

Es wurden Al₂O₃ mit einer spezifischen Oberfläche von 13 m²/g und 0,55 Gew.-% TODS, bezogen auf die Pulvermenge, zum Einstellen der höchsten Abscheiderate eingesetzt. Als polares Lösungsmittel wurde wasserfreies Ethanol verwendet. Der Ansatz wurde mit einem Feststoffgehalt von 50-65 Vol.-% geknetet. Bei Einpendeln des Drehmoments auf 25 Nm, das vom Knetaggregat aufzubringen war, auf einen konstanten Wert war die Dispergierung beendet. Die Aufbereitungsdauer lag bei 60 min. Anschließend wurde die Konzentration auf 10 Vol.-% Feststoff verdünnt. Die mittlere Korngröße betrug 250 nm. Zur Abscheidung wurde die Stromdichte auf 0,13 mA/cm² eingestellt. Nach einer Abscheidedauer von 15 min. war eine 10 mm dicke Schicht entstanden, die im ungesinterten Zustand zu 62 % verdichtet war, bezogen auf die theoretische Dichte von 3,99 g/cm³.

### Beispiel 3

Zur elektrophoretischen Beschichtung eines Bauteils mit amorphem SiO₂ mit einer spezifischen Oberfläche von ca. 200 g/m² wurde ein Bad aus getrocknetem Ethanol, 45 Vol.-% SiO₂ und 2,9 Gew.-% TODS mit einem Kneter aufbereitet. Die Knetzeit betrug bei einem Drehmoment von 65 Nm 120 min. Zur Abscheidung wurde das Bad aufgrund der hohen Viskosität auf 4 Vol.-% SiO₂ verdünnt. Die mittlere Teilchengröße betrug 20 nm. Bei Einstellung einer Spannung von 67 V/cm für 5 min entstanden Schichtdicken von etwa 0,8 mm.

## Patentansprüche

1. Verfahren zur Aufbereitung eines Bades zur elektrophoretischen Abscheidung von nanokristallinem Metalloxid, **dadurch gekennzeichnet, daß** ein das Metalloxid mit 35-65 Vol.-% und einen Dispergator enthaltendes lösungsmittelhaltiges Konzentrat in einem Kneter geknetet wird, und daß nach der Aufbereitung das Konzentrat mit Ethanol und/oder Butanol auf einen Metalloxidanteil von 2-25 Vol.-% verdünnt wird.

2. Verfahren nach Anspruch 1, **dadurch gekennzeichnet, daß** mit einer derart hohen Scherkraft geknetet wird, daß das Metalloxid eine mittlere Korngröße von 20-80 nm aufweist.

3. Verfahren nach Anspruch 1 oder 2, **dadurch gekennzeichnet, daß** als Dispergator Trioxadecansäure mit 0,5-10 Gew.-% des Feststoffs des Konzentrats eingesetzt wird.

4. Verfahren nach Anspruch 3, **dadurch gekennzeichnet, daß** der Dispergator mit 3-5 Gew.-% des Feststoffs des Konzentrats eingesetzt wird.

5. Verfahren nach einem der vorhergehenden Ansprüche, **dadurch gekennzeichnet, daß** ein Ethanol und/oder Butanol enthaltendes Konzentrat eingesetzt wird.

6. Verfahren nach einem der vorhergehenden Ansprüche, **dadurch gekennzeichnet, daß** ein das Metalloxid mit 45-55 Vol.-% enthaltendes Konzentrat eingesetzt wird.

7. Verfahren nach einem der vorhergehenden Ansprüche, **dadurch gekennzeichnet, daß** als Metalloxid eines oder mehrere der Oxide aus der Gruppe ZrO₂, Al₂O₃, TiO₂, SiO₂, BaTiO₃ ausgewählt wird/werden.

## Claims

1. Method for preparing a bath for the electrophoretic deposition of nanocrystalline metal oxide, **characterized in that** a solvent-containing concentrate, which contains the metal oxide in an amount of 35-65% by volume and a dispersing agent, is kneaded in a kneader, and **in that** after the preparation the concentrate is diluted with ethanol and/or butanol to a metal oxide content of 2-25% by volume.

2. Method according to Claim 1, **characterized in that** kneading is carried out with a shear force which is so high that the metal oxide has a mean grain size of 20-80 nm.

3. Method according to Claim 1 or 2, **characterized in that** the dispersing agent used is trioxadecanoic acid in an amount of 0.5-10% by weight with respect to the solid of the concentrate.

4. Method according to Claim 3, **characterized in that** the dispersing agent is used in an amount of 3-5% by weight with respect to the solid of the concentrate.

5. Method according to one of the preceding claims, **characterized in that** an ethanol- and/or butanol-containing concentrate is used.

6. Method according to one of the preceding claims, **characterized in that** a concentrate which contains the metal oxide in an amount of 45-55% by volume is used.

7. Method according to one of the preceding claims, **characterized in that** the metal oxide selected is one or more of the oxides selected from the group consisting of ZrO₂, Al₂O₃, TiO₂, SiO₂, BaTiO₃.

## Revendications

1. Procédé de traitement d'un bain en vue du dépôt électrophorétique d'un oxyde métallique nanocristallin,
**caractérisé en ce qu'**
on pétrit dans une pétrisseuse un concentré contenant un solvant et contenant l'oxyde métallique à raison de 35 à 65 % en volume et un dispersant, et après traitement on dilue le concentré avec de l'éthanol et/ou du butanol à une teneur en oxyde métallique de 2 à 25 % en volume.

2. Procédé selon la revendication 1,
**caractérisé en ce qu'**
on pétrit avec une force de cisaillement telle que l'oxyde métallique présente une granulométrie moyenne de 20 à 80 nm.

3. Procédé selon la revendication 1 ou 2,
**caractérisé en ce qu'**
on utilise comme dispersant de l'oxyde trioxadécanoïque avec de 0,5 à 10 % en poids de solides dans le concentré.

4. Procédé selon la revendication 3,
**caractérisé en ce qu'**
on utilise le dispersant avec de 3 à 5 % en poids de solides du concentré.

5. Procédé selon l'une des revendications précédentes,
**caractérisé en ce qu'**
on utilise un concentré contenant de l'éthanol et/ou du butanol.

6. Procédé selon l'une des revendications précédentes,
**caractérisé en ce qu'**
on utilise un concentré contenant l'oxyde métallique à raison de 45 à 55 % en poids.

7. Procédé selon l'une des revendications précédentes,
**caractérisé en ce qu'**
on choisit comme oxyde métallique un ou plusieurs des oxydes du groupe ZrO₂, Al₂O₃, TiO₂, SiO₂, BaTiO₃.
